# EUROPEAN PATENT SPECIFICATION

(11) **EP 2 048 072 B1**
(45) Date of publication and mention of the grant of the patent: **13.08.2014**
(21) Application number: 08253262.3
(22) Date of filing: 07.10.2008
(51) Int. Cl.: B62K 11/00

(54) **Motorcycle**
Motorrad
Motocyclette

(30) Priority: 11.10.2007 JP 2007265491
(43) Date of publication of application: 15.04.2009
(73) Proprietor: Yamaha Hatsudoki Kabushiki Kaisha, Iwata-shi, Shizuoka 438-8501 (JP)
(72) Inventor: Mine, Yutaka, Shizuoka-ken 438-8501 (JP); Kawakami, Satoshi, Shizuoka-ken 438-8501 (JP)
(74) Representative: Moreland, David

(56) References cited:
- FR-A- 2 226 032
- JP-A- 1 233 186
- JP-A- 9 249 170
- US-A1- 2002 020 367
- US-A1- 2002 112 680

## Description

### FIELD OF THE INVENTION .

The present invention relates to a motorcycle.

### BACKGROUND TO THE INVENTION

It is known in the art to mount a radiator to an engine in a state of vibration isolation. Such an arrangement is disclosed in, for example, JP-A-2002-201938. In the known technology, both upper and lower tanks arranged above and below a radiating core of a radiator are formed from a synthetic resin. On the other hand, a radiating fan is opposed to an inside of the radiator and a shroud formed from a synthetic resin is provided to surround the radiating fan. The whole radiator is mounted to an engine through the shroud. Thus the radiator is mounted in a state, in which vibrations from the engine are absorbed by the elasticity of a material of the shroud.

The closest prior art is document US 2002/0112680 that describes a motorcycle according to the preamble of claim 1.

US 2002/0112680 describes a radiator for a vehicle, wherein the radiator comprises upper and lower tanks and a heat radiation core. The upper and lower tanks are integrally formed with connecting collars. The connecting collars are fixed to a shroud by rivets. The shroud is made of an elastic material such as a synthetic resin. The radiator is thus mounted to the engine unit via the shroud, wherein the shroud surrounds a cooling fan. The shroud is provided with discharge parts.

With the construction described above, the whole radiator is supported by members (the shroud, the upper and lower tanks) formed from a synthetic resin, thus causing a fear of insufficient support strength for a large-sized radiator applied to an engine having a large displacement. Also, since the shroud surrounding the cooling fan is formed from a synthetic resin having a poor heat dissipation as compared with a metallic material, there is left room for improvement in terms of the cooling efficiency of the radiator.

The invention has been devised in view of the problems identified above and has its object to provide a motorcycle capable of supporting a radiator in a vibration isolating manner with a high support strength.

### SUMMARY OF THE INVENTION

According to a first aspect of the present invention there is provided a motorcycle comprising:
a metallic support portion defining a radiating opening;
a radiator mounted on the support portion;
a cooling fan mounted proximate to the radiator and arranged to drive cooling air past the radiator and through the radiating opening; and
a vibration absorbing material interposed between the support portion and the radiator.

The radiator may comprise first and second tanks arranged on both ends thereof with a core arranged therebetween.

A mount portion adapted to be mounted on the support portion may be provided at one lengthwise end of the first tank. A connection to a pipe for circulation of a cooling water between the first tank and an engine may be provided at the other lengthwise end of said first tank. This arrangement may alternatively, or additionally, be provided on the second tank.

At least two fixed portions adapted to be fixed to the support portion may be arranged in parallel at a lengthwise end of the second tank. The fixed portions may be arranged in a position diagonal or diagonally opposed relative to the mount portion.

Only that portion of the radiator, which is mounted to the support portion, may contact with the support portion through the vibration absorbing material. The remaining portion may be free from contact with the support portion.

The support portion may comprise a fan case mounted to a crank case of the engine and the fan may be positioned at least partially in the fan case.

The fan may comprise a centrifugal fan. The fan may define an axis of rotation arranged in parallel to an axis of the fan case. This arrangement may permit cooling air passing through the radiator to be directed towards the radiating opening.

The radiator may be arranged outwardly of the engine in a vehicle width direction and may be arranged with a thickness direction, in which a dimension thereof is set to a minimum among respective dimensions thereof in a height direction, a width direction, and the thickness direction, directed in the vehicle width direction.

The engine may comprise a unit swing type engine capable of swinging vertically relative to a vehicle frame about a pivot shaft arranged along the vehicle width direction.

The cooling fan may be located inwardly of the radiator. Alternatively, the cooling fan may be located outwardly of the radiator.

Another aspect of the invention relates to a motorcycle comprising a metallic support portion provided on a vehicle and formed on an outer surface thereof with a radiating opening, a radiator mounted to a tip end of the support portion, a cooling fan arranged in opposition to the radiator to have heat, which is discharged from the radiator, discharged outside through the radiating opening, and a vibration absorbing material interposed between the support portion and the radiator.

Since the radiator is mounted through the vibration absorbing material to get off direct transmission of vibrations of a vehicle to the radiator, it is possible to mitigate a demand for a countermeasure (for example, improving the strength of a connection port to a hose or the like for circulation of a cooling water) against vibrations of the radiator. When the support portion is formed from a synthetic resin, the support portion itself can absorb vibrations to the radiator to some extent, but in case of application to a motorcycle having a large displacement or the like, the support portion formed from a synthetic resin brings about a fear in terms of strength due to an increase of the radiator itself in weight. In this respect, the invention eliminates anxiety in strength sine the support portion is metallic. Besides, an air flow generated by the fan and carrying heat from the radiator passes through the radiating opening to be discharged outside. At this time, a high heat dissipation is obtained since the metallic support portion is high in thermal conductivity as compared with a resin.

### BRIEF DESCRIPTION OF THE DRAWINGS

These and other aspects of the present invention will now be described, by way of example only, with reference to the accompanying drawings, in which:
Fig. 1 is a side view showing the whole of a motorcycle according to an embodiment of the present invention;
Fig. 2 is a cross sectional view showing the periphery of a radiator of the motorcycle shown in Fig. 1;
Fig. 3 is a side view showing the periphery of the radiator;
Fig. 4 is a front view showing the radiator;
Fig. 5 is a front view showing a fan case;
Fig. 6 is a side view showing the fan case;
Fig. 7 is a cross sectional view showing, in enlarged scale, a mount portion of the radiator; and
Fig. 8 is a side view showing a radiator cover.

### DETAILED DESCRIPTION OF THE DRAWINGS

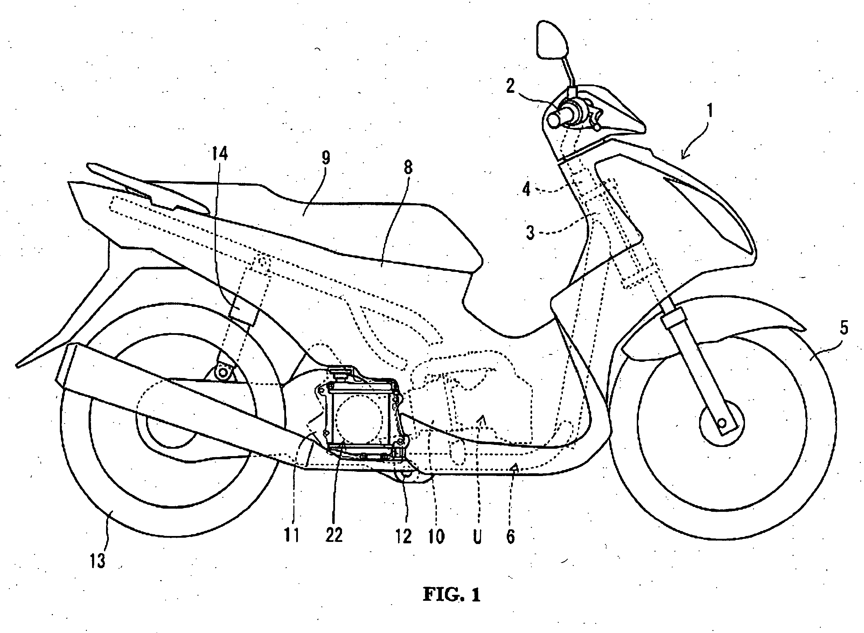

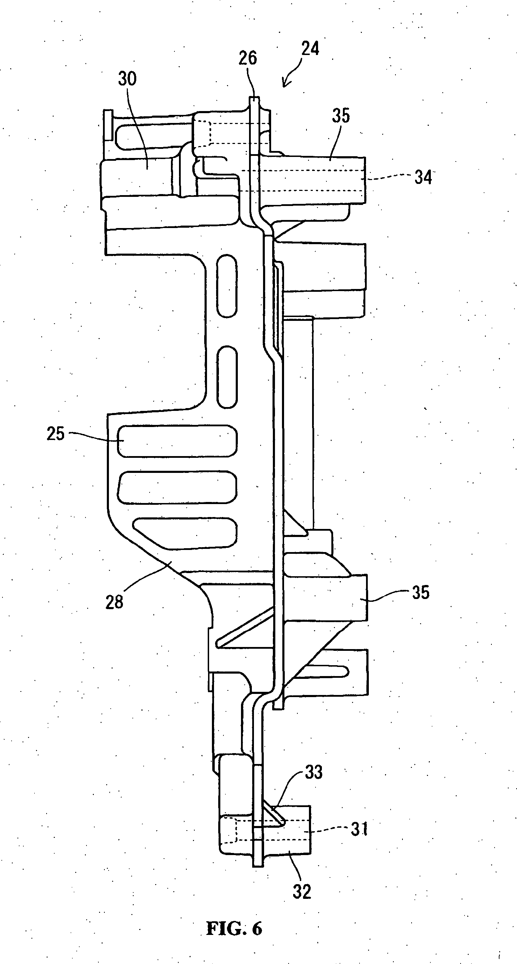

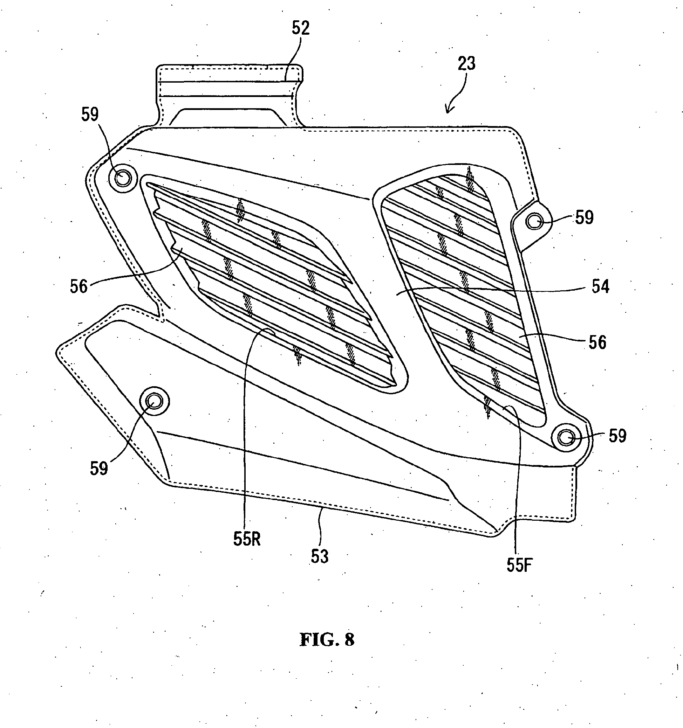

An embodiment of the invention will be described with reference to Figs. 1 to 8. In addition, the term "longitudinal" in the following description is based on a longitudinal direction of a vehicle and the term "left and right" means left and right when seen from a driver.

Fig. 1 shows a motorcycle according to an embodiment of the present invention. A vehicle body 1 includes a handle 2 at a front portion thereof, the handle 2 being connected to a front wheel 5 through a steering shaft 4 extended through a head pipe 3. A vehicle frame 6 constituting a skeleton structure of the whole vehicle body 1 is joined to the head pipe 3. The vehicle body 1 is covered by a body cover 8 and a seat 9 is arranged centrally thereof.

The vehicle frame 6 mounts thereon an engine unit U which comprises an engine 10, a crank case 11, etc. The engine unit U is suspended from the vehicle frame 6 to be able to turn about a pivot shaft 12. A rear wheel 13 is connected to a rear portion of the engine unit U and a lower end of a rear shock absorber 14 is connected to the rear portion to be able to turn. An upper end of the rear shock absorber 14 is connected to the vehicle frame 6 to be able to turn. Owing to this, the engine unit U together with the rear wheel 13 becomes able to swing about the pivot shaft 12, thus constituting a swing unit type engine.

The engine 10 according to the embodiment is a four-stroke single cylinder engine and is mounted on the vehicle frame 6 with a cylinder axis directed substantially horizontal and forward. The engine 10 is clamped with a cylinder block 15 and a cylinder head 16 arranged in this order on a front wall of the crank case 11. A crank shaft 19 is accommodated in and supported on the crank case 11 along a vehicle width direction to be able to rotate about an axis thereof.

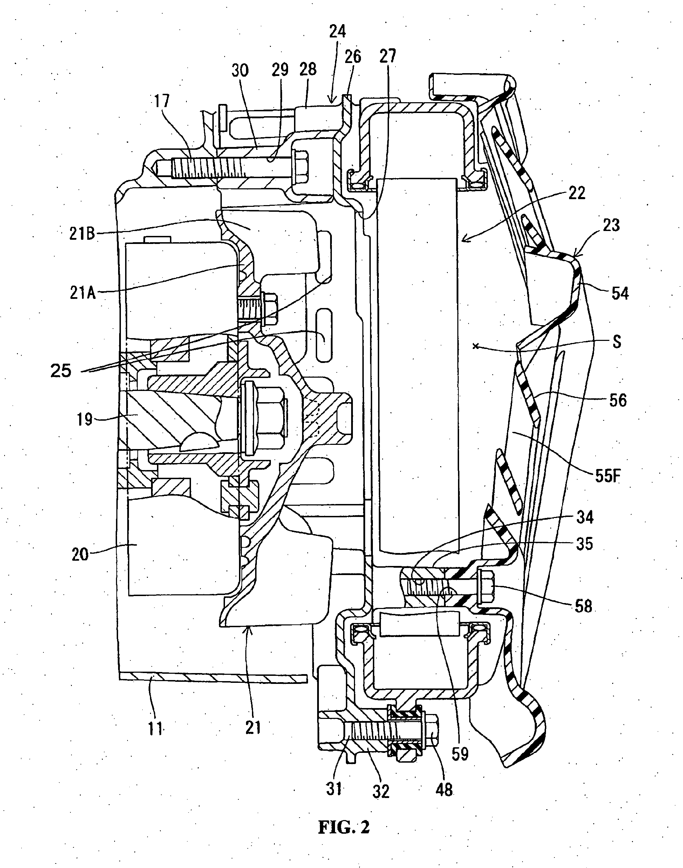

A left structure of the crank shaft 19 in the vehicle width direction is omitted in Fig. 2 but arranges therein a V-belt wound type automatic transmission for driving of a rear wheel. On the other hand, a flywheel magnet 20 for generation and a fan 21 for cooling of a radiator 22 are mounted to a right side of the crank shaft 19 in a vehicle width direction and aligned in parallel in an axial direction. Further, the radiator 22 is arranged on the right side of the fan 21 and the whole radiator 22 is covered by a radiator cover 23.

The fan 21 is arranged coaxially with the crank shaft 19 to be able to rotate interlocking with the crank shaft 19. The fan 21 comprises a rotating plate 21A in the form of a disk and blade pieces 21B having a plurality of pieces provided protrusively and integrally on a surface of the rotating plate 21A opposed to the radiator 22 and being arranged spirally as a whole. In this manner, the fan 21 according to the embodiment comprises a centrifugal fan and when the fan rotates as the crank shaft 19 rotates, outside or cooling air passes through the radiator 22 to be taken into a side of the fan 21 and then is changed to a centrifugal (radial) direction to be discharged through a radiating opening 25 of a fan case 24 described later.

The mount construction of the radiator 22 will now be described in detail. A right end of the crank case 11 is formed to be opened laterally and has substantially the whole of an outer peripheral surface of the fan 21 projecting outward from the opening of the crank case 11.

The fan case 24 is metallic (for example, aluminum-pressure die-casting) and formed on an outer peripheral edge thereof with a mount plate portion 26. A vent hole 27 having substantially the same hole diameter as an outside diameter of the fan 21 is opened centrally of the mount plate portion 26. The vent hole 27 is made coaxial with the fan 21 when the fan case 24 is mounted to the crank case 11. A cylindrical-shaped portion 28 formed to assume the shape of a short cylinder having a larger diameter than the hole diameter of the vent hole 27 is formed protrusively on a back surface (side opposed to the crank case 11) of the fan case 24 to be coaxial with the vent hole 27. The cylindrical-shaped portion 28 is formed on an outer peripheral surface thereof with a multiplicity of radiating openings 25, which are formed to be slit and opened.

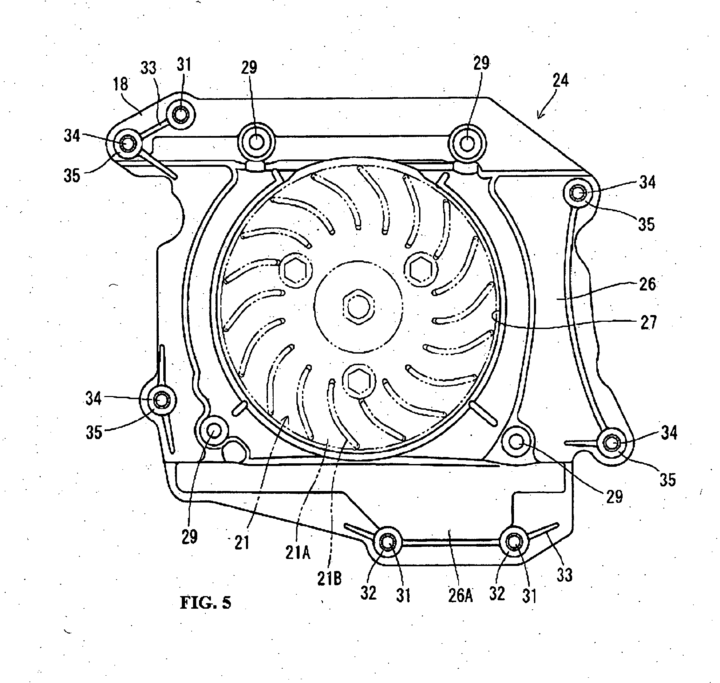

Case mount holes 29 for fixation to the crank case 11 extend through four locations on the mount plate portion 26, which surround the vent hole 27. As shown in Fig. 5, the respective case mount holes 29 are arranged in two horizontally spaced locations on the mount plate portion 26 above the vent hole 27 and two locations positioned to interpose therebetween a lower portion of the vent hole 27 and spaced from each other by a larger interval than that between the case mount holes 29 arranged on an upper side. Hollow boss portions 30 in positions corresponding the respective case mount holes 29 project toward the crank case 11 while avoiding an interference with the cylindrical-shaped portion 28 on a back side of the mount plate portion 26. The respective boss portions 30 are formed to have substantially the same length as a horizontal length of the cylindrical-shaped portion 28 and align with bolt holes (not shown), which are formed on an opposite wall surface of the crank case 11, to enable bolts 17 to be screwed thereinto.

Thereby, the whole fan case 24 can be fixed to a right end side wall surface of the crank case 11.

Radiator mount holes 31 for mounting of the radiator 22 are arranged in three locations in total on the mount plate portion 26 (see Fig. 5). Inclined portions, outer edges of which are cut obliquely, are formed at both widthwise ends on an upper portion of the mount plate portion 26 and one of the radiator mount holes 31 (upper-side radiator mount hole 31) is provided on the inclined portion 18 (a left, upper corner portion of the mount plate portion 26) on the left in the figure. On the other hand, an enlarged portion 26A, a substantially right half portion of which is enlarged downward, is formed on a lower side of the mount plate portion 26 and the radiator mount holes 31 (lower-side radiator mount holes 31) are arranged in two locations at a predetermined interval on a lower edge of the enlarged portion 26A to be aligned horizontally in parallel. The respective radiator mount holes 31 are formed along axes of thread fastening cylinder portions 32, which are formed integrally to project in front-back both directions of the mount plate portion 26. The respective radiator mount holes 31 comprise a threaded hole, into which a bolt 48 for fixation of the radiator 22 can be screwed. Reinforcement ribs 33 are provided on bases of those portions of the respective thread fastening cylinder portions 32, which project on an opposite side to the radiator 22. The radiator 22 butts against the fan case 24 only at outer end surfaces of the respective thread fastening cylinder portions 32 and the remainder thereof floats from the fan case 24 in a non-contact state.

Cover mount holes 34 for mounting of the radiator cover 23 are also arranged on the mount plate portion 26. The cover mount holes 34 are arranged in two upper and lower locations on respective sides of the mount plate portion 26 to interpose the vent hole 27 therebetween in a width direction. The respective cover mount holes 34 are formed along axes of sleeve portions 35 projecting integrally toward an outer surface side (toward the radiator cover 23) of the mount plate portion 26. The respective cover mount holes 34 comprise a threaded hole, into which a bolt 58 for fixation to the radiator cover 23 can be screwed.

The radiator 22 comprises an upper tank 36, a lower tank 37, and a core 38 connecting between the upper and lower tanks 36, 37. The radiator is mounted to the fan case in a manner described later. When mounted, the radiator is arranged with a thickness direction directed in a vehicle width direction. According to the embodiment, the radiator is set to have a shorter thickness dimension than both a height dimension and a width dimension.

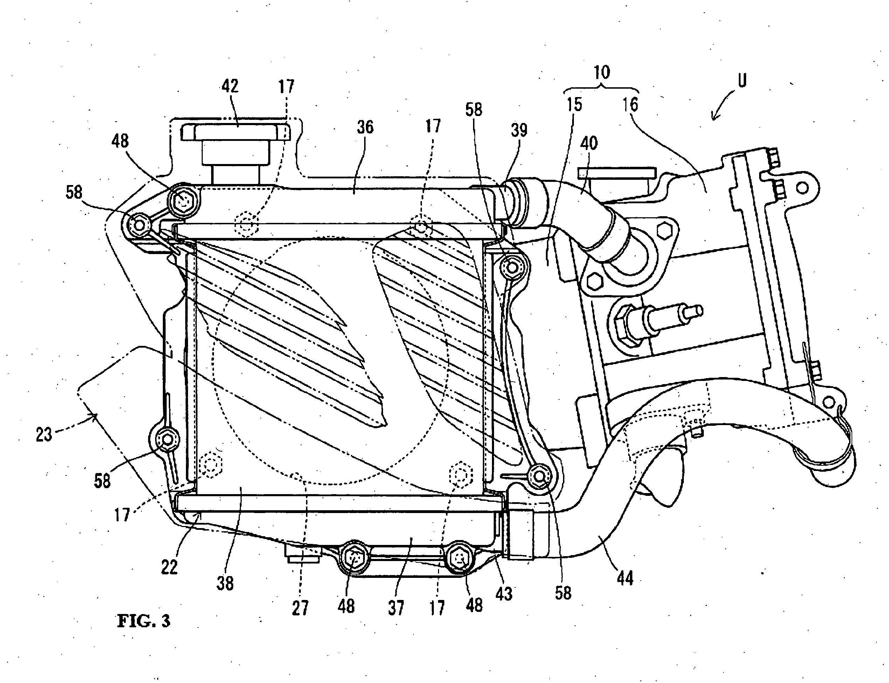

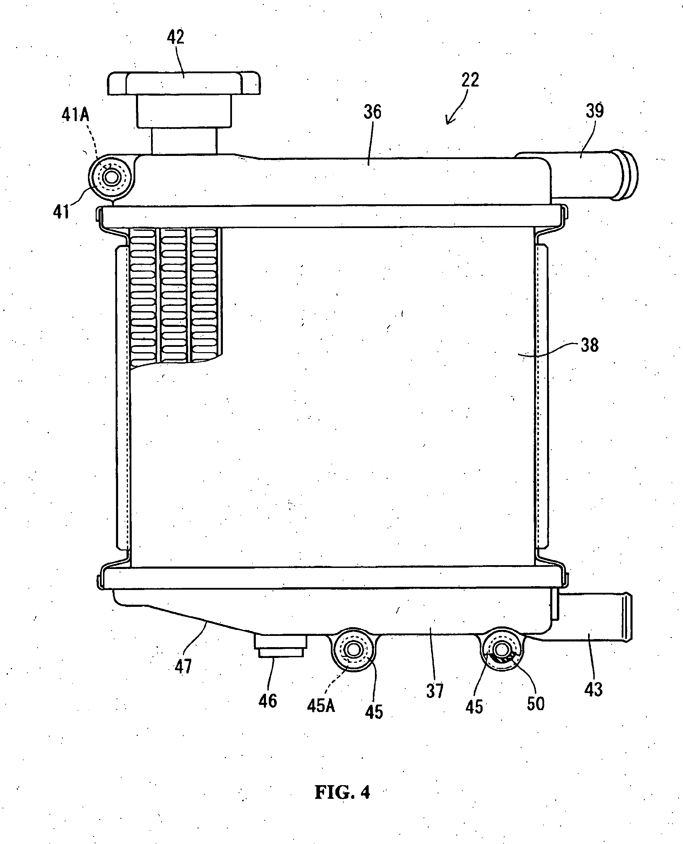

As shown in Fig. 4, an inflow side connecting pipe 39 projects obliquely toward an engine side of the upper tank 36 from a back surface side (opposite side to the fan case 24) at a right end in the figure. A water-supply hose 40 (Fig. 3) is connected at one end thereof to the inflow side connecting pipe 39 and connected at the other end thereof to the cylinder head 16 to be communicated to a water jacket (not shown) formed therein. An upper mount portion 41 (mount portion) for fixation to the fan case 24 is arranged at a left end (vehicle rear end on an opposite side to a side, on which the inflow side connecting pipe 39 is provided) of an upper surface of the upper tank 36 in the figure. The upper mount portion 41 is substantially in the form of a disk and formed to project from the upper tank 36 toward the rear of a vehicle. Also, a cap 42 for opening and closing of a water supply port is mounted in a position on the upper surface of the upper tank 36 inwardly of the upper mount portion 41 in a width direction.

On the other hand, an outflow side connecting pipe 43 projects horizontally forward from a right end side surface (side on the right of a vehicle) of the lower tank 37 in the figure. A drainage hose 44 is connected at one end thereof to the outflow side connecting pipe 43 and connected at the other end thereof to a suction port of a cooling water pump (both are not shown) provided on the cylinder head 16. A drain port 46 capable of opening and closing is arranged leftward (toward the rear of a vehicle) on a lower surface of the lower tank 37 in the figure 4. A side of a lower surface of the lower tank 37 rearwardly of the drain port 46 defines an inclined portion 47 being upgrade as it goes rearward. The reason why such inclined portion 47 is provided is that if it were not provided, a rear end side of the lower tank 37 would become lower than a front end side thereof when a driver's body weight puts the radiator 22 together with the engine 10 in a rearwardly lower posture, thus making a cooling water liable to gather but when such inclination is provided, a bottom surface of the lower tank 37 is held at least in an inclined state even when the radiator 22 is made rearwardly lower.

Lower mount portions 45 (fixed portions) are arranged in two locations on a lower edge of a right half of the lower tank 37 in the figure, that is, diagonal positions on the upper mount portion 41 to be spaced from each other and aligned in parallel in a width direction. Likewise the upper mount portion 41, the both lower mount portions 45 are substantially in the form of a disk and formed to project downward. The grommet mount holes 41A, 45A, respectively, extend centrally of and through the respective upper and lower mount portions 41, 45.

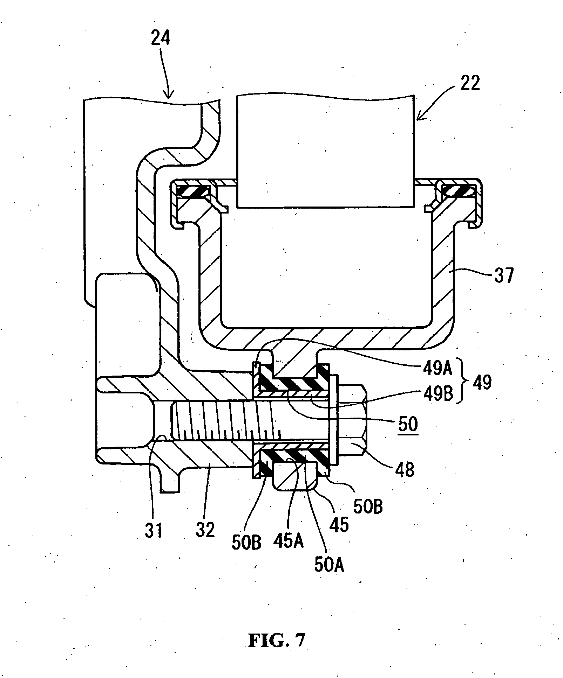

As shown in Fig. 7, collars 49 and grommets 50 (vibration absorbing material) are fitted into the grommet mount holes 41A, 45A. The collars 49 comprise a base plate 49A in close contact with and round the radiator mount hole 31 of the fan case 24, and a cylindrical shaft portion 49B projecting centrally of the base plate 49A to allow a bolt 48 to be inserted therethrough. The grommets 50 are formed integrally from an elastic material such as rubber or the like. The grommets 50 comprise a cylindrical base portion 50A inserted in a state in close contact with inner peripheral surfaces of the grommet mount hole 41A, 45A and an outer peripheral surface of the cylindrical shaft portion 49B of the collar 49, and a pair of flange portions 50B projecting in a flanged manner from both axial ends of the base portion 50A. Both flange portions 50B are formed to assume a shape of a disk having substantially the same diameter as that of the respective mount portions 41, 45 and can interpose the respective corresponding mount portions 41, 45 in a thickness direction. Thus the whole radiator 22 is supported by the fan case 24 in a state, in which vibrations are suppressed by the elasticity of the grommets 50, by clamping the bolts 48 into the radiator mount holes 31 of the fan case 24 in a state, in which the grommets 50 and the collars 49 are mounted to the respective mount portions 41, 45.

The radiator cover 23 is formed integrally from a synthetic resin. Bolt through-holes 59, respectively, are formed through the radiator cover 23 to be positioned in four locations in total to be coaxial with the respective cover mount holes 34 of the fan case 24. A cap cover portion 52 projects upward from an upper edge of the radiator cover 23 to surround the water supply port of the radiator 22 and a substantially half peripheral portion of an outer peripheral edge of the cap. A lower edge of the radiator cover 23 defines an inclined edge 53 being upgrade as it goes rearward and eliminates an interference with an exhaust pipe.

Cooling-wind take-in ports 55F, 55R are opened fore and aft apart to the radiator cover 23 to interpose therebetween a pillar 54 formed substantially longitudinally. Both take-in ports 55F, 55R are arranged to overlap each other in a most region of the core 38 of the radiator 22 as viewed from laterally of a vehicle. A plurality of baffle plates 56 comprising a plurality of pieces are transversely arranged in the respective take-in ports 55F, 55R in a height direction and set in a rearwardly directed upgrade to enable taking in a travel wind into the radiator cover 23. Also, the whole radiator cover 23 is bent and formed to have a portion thereof, on which the pillar 54 is provided, being outward most away from the radiator 22 and approaching the radiator 22 as it goes toward both front and rear ends. That is, a space S, into which a travel wind is taken, is ensured between the radiator cover 23 and the radiator 22 within the radiator cover 23, so that a part of a travel wind taken into the space from the front take-in port 55F as a vehicle travels is taken in as a cooling wind, which passes through the radiator 22, by the fan 21 and the remainder of the travel wind is caused to pass therethrough via the rear take-in port 55R.

According to the embodiment constructed in the above manner, the radiator 22 is supported elastically at the respective upper and lower mount portions 41, 45 on the fan case 24 by the grommets 50, which have a favorable elasticity, so that it is possible to ease that situation, in which vibrations of a vehicle and vibrations of the engine 10 are transmitted to the radiator 22. Conventionally, a measure to counter vibrations is taken by increasing the strength of the connecting pipes 39, 43 to the water-supply and drainage hoses 40, 44 connected to the radiator 22 but vibrations of the radiator 22 itself are effectively reduced in the embodiment, so that it becomes unnecessary to increase the connecting pipes 39, 43 in strength than needed. This is especially significant in case of an engine type, which is susceptible to vibrations, such as a swing unit engine adopted in the embodiment.

Also, a cooling wind for the radiator 22 is taken into the radiator cover 23 through the take-in ports 55F, 55R of the radiator cover 23. The cooling wind passes through the core 38 to be discharged outside from the radiating openings 25 of the fan case 24. At this time, the fan case 24 is formed from a metal (aluminum) having an excellent heat dissipation, so that the radiator 22 is heightened in cooling efficiency. Also, a further merit of the fan case 24 being metallic includes a matter that the fan case is effective in supporting the radiator 22 having a large capacity owing to being high in support strength as compared with a fan case formed from a synthetic resin.

In this manner, according to the embodiment, even when the fan case 24 is formed from a metallic material being excellent in coolability and support strength for the radiator, the construction can support the radiator 22 elastically and so is very excellent as a support construction of the radiator 22.

The following featuring construction can be found from the embodiment.
(1) The radiator 22 comprises the tanks 36, 37 arranged on respective upper and lower ends thereof with the core 38 arranged therebetween. A mount portion (the upper mount portion 41) for a support portion (the fan case 24) is mounted at one end of the upper tank 36 in a longitudinal direction. A connection (the inflow side connecting pipe 39) for a pipe (water-supply hose 40) for circulation of a cooling water between the upper tank and the engine 10 is provided at the other end of the tank 36 in the longitudinal direction.
   With such construction, the radiator 22 is mounted to the support portion (the fan case 24) by the mount portion (the upper mount portion 41), and the pipe (water-supply hose 40) for circulation of a cooling water and the connection (the inflow side connecting pipe 39) are connected together on the other end side whereby the radiator 22 is simply supported at both ends in a length direction (longitudinal direction of a vehicle). Accordingly, the work of mounting of the radiator 22 can be performed simply.
(2) With the construction of (1), for the radiator 22, the mount portion (the upper mount portion 41) is arranged on the upper tank 36, and at least two fixed portions (the lower mount portions 45) for the support portion (the fan case 24) are arranged in parallel in diagonal positions of the mount portion (the upper mount portion 41) at the longitudinal ends on the other (the lower tank 37) of the tanks.
   With such construction, the radiator 22 is supported on the support portion (the fan case 24) in at least three locations in total by the mount portion in at least one location (the upper mount portion 41) and at least two fixed portions (the lower mount portions 45), so that inclination of the radiator 22 is restricted. Also, since the fixed portions (the lower mount portions 45) are arranged toward the longitudinal end of the other tank (the lower tank 37), an end, at which the fixed portions (the lower mount portions 45) are not provided, is made an empty space and can be made effective use of for arrangement of other members, for example, the exhaust pipe, etc.
(3) Only that portion of the radiator 22, which is mounted to the support portion (the fan case 24), contacts with the support portion (the fan case 24) through the vibration absorbing material (the grommets 50) and the remaining portion does not contact with the support portion (the fan case 24).
   With such construction, the radiator is mounted to the support portion (the fan case 24) through the vibration absorbing material (the grommets 50), so that vibrations generated during traveling causes the radiator 22 to be slightly displaced relative to the support portion (the fan case 24) . Since a region, in which the radiator 22 and the support portion (the fan case 24) contact with each other, is limited to a minimum, however, it is possible to decrease that range, in which abrasion is brought about.
(4) The support portion comprises the fan case 24 mounted to the crank case 11 of the engine 10 and the fan 21 is stored in the fan case 24.
   With such construction, the fan 21 itself constitutes a vibration generating source and so when the fan 21 is arranged outside the radiator 22, that is, on a side distant from the engine 10, it is possible that vibrations acting on the radiator 22 will be further amplified. However, by storing the fan 21 in the fan case 24 close to the engine 10, it is possible to suppress vibrations acting on the radiator 22 to a relatively low degree.
(5) With the construction of (4), the fan 21 comprises a centrifugal fan, of which an axis of rotation is arranged in parallel to an axis of the fan case 24 to direct an air flow passing through the radiator 22 toward the radiating openings 25.
   With such construction, the adoption of a centrifugal fan makes it possible to effectively discharge heat from the radiating openings 25.
(6) The radiator 22 is arranged outwardly of the engine 10 in the vehicle width direction and arranged with a thickness direction, in which a dimension thereof is set to a minimum among respective dimensions in a height direction, a width direction, and the thickness direction, directed in the vehicle width direction.
   With such construction, even in the case where the radiator 22 is arranged outwardly of the engine 10 in the vehicle width direction, an increase in vehicle width dimension can be limited to a minimum since the radiator is arranged with the thickness direction, in which a dimension is minimum, directed in the vehicle width direction.
(7) The engine comprises a unit swing type engine capable of swinging vertically relative to a vehicle frame about a pivot shaft arranged along the vehicle width direction.
   With such construction, while vibrations of a vehicle generated during traveling are further liable to be transmitted to a radiator in a unit swing type engine, such effect is conspicuous upon application of the invention since the invention exhibits a high support strength by the metallic support portion (the fan case 24) and a high vibration resistance by the vibration absorbing material (the grommets 50).

The invention is not limited to the embodiment illustrated by the descriptions and drawings but the following embodiment is also embraced in the technical scope of the invention, and other embodiments than the following one can be variously modified and carried out within a range not departing from the scope of the invention defined in the claims.
(1) While the embodiment has shown the case where the fan case 24 as the support portion is mounted as a separate member to the engine 10, the fan case 24 may be provided protrusively and integrally on the engine 10.
(2) According to the embodiment, the fan 21 is constructed to interlock with the crank shaft 19 but may be constructed to be driven separately from and independently of the crank shaft 19, for example, electrically driven.
(3) A location, in which the radiator 22 is mounted, is not limited to a side of the crank case 11 but the radiator may be arranged forwardly of the engine 10 and supported by the vehicle frame 6.
(4) While the embodiment adopts a centrifugal fan as a type of the fan 21, it is possible to adopt an axial type one instead of this.
(5) While the radiator 22 in the embodiment is vertically mounted so that the both tanks 36, 37 are positioned above and below, the radiator 22 may be mounted in a transverse posture so that the both tanks 36, 37 may be positioned fore and aft on a vehicle.

### Description of Reference Numerals and Signs

- 1:: vehicle body
- 2:: vehicle frame
- 10:: engine
- 11:: crank case
- 12:: pivot shaft
- 21:: fan
- 22:: radiator
- 24:: fan case (support portion)
- 25:: radiating opening
- 36:: upper tank
- 37:: lower tank
- 39:: inflow side connecting pipe (connection)
- 40:: water-supply hose (piping)
- 41:: upper mount portion (mount portion)
- 45:: lower mount portion (fixed portion)
- 50:: grommet

## Claims

1. A motorcycle comprising:
a metallic fan case (24) defining a radiating opening (25) and mounted to or integral with a crank case (11) of the engine (10),
a crank shaft (19) accommodated in and supported on the crank case (11) to be able to rotate about an axis thereof;
a radiator (22) mounted on the fan case (24) and arranged outwardly of the engine (10) in a vehicle width direction;
a cooling fan (21) mounted proximate to the radiator (22) and arranged to drive cooling air past the radiator (22) and through the radiating opening (25), the fan (21) positioned at least partially in the fan case and adapted to rotate interlocking with the crank shaft (19); and **characterised in that**, the fan case (24) formed on an outer peripheral edge thereof with a mount plate portion (26); a vibration absorbing material (50) interposed between the fan case (24) and the radiator (22).

2. The motorcycle according to claim 1, wherein the radiator (22) comprises first and second tanks (36, 37) arranged on both ends thereof with a core (38) arranged therebetween.

3. The motorcycle according to claim 1, wherein a mount portion (41) adapted to be mounted on the fan case (24) is provided at one lengthwise end of the first tank (36), and a connection (39) to a pipe (40) for circulation of a cooling water between the first tank (36) and an engine (10) is provided at the other lengthwise end of said first tank (36).

4. The motorcycle according to claim 3, wherein at least two fixed portions (45) adapted to be fixed to the fan case (24) are arranged in parallel at a lengthwise end of the second tank (37) and in a position being diagonal to the mount portion (41).

5. The motorcycle according to any preceding claim, wherein only that portion of the radiator (22), which is mounted to the fan case (24), contacts with the fan case (24) through the vibration absorbing material (50) and the remaining portion does not contact with the fan case (24).

6. The motorcycle according to any preceding claim, wherein the fan (21) comprises a centrifugal fan defining an axis of rotation arranged in parallel to an axis of the fan case to direct cooling air passing through the radiator (22) to the radiating opening (25).

7. The motorcycle according to any preceding claim, wherein the radiator (22) is arranged with a thickness direction, in which a dimension thereof is set to a minimum among respective dimensions thereof in a height direction, a width direction, and the thickness direction, directed in the vehicle width direction.

8. The motorcycle according to any preceding claim, wherein the engine (10) comprises a unit swing type engine capable of swinging vertically relative to a vehicle frame (2) about a pivot shaft (12) arranged along the vehicle width direction.

9. The motorcycle according to any preceding claim, wherein the cooling fan (21) is located inwardly of the radiator (22).

10. The motorcycle according to any one of claims 1 to 9, wherein the cooling fan (21) is located outwardly of the radiator (22).

## Patentansprüche

1. Motorrad, das Folgendes umfasst:
ein metallisches Lüftergehäuse (24), das eine Abstrahlungsöffnung (25) definiert und an einem Kurbelgehäuse (11) des Motors (10) angebracht oder integral mit demselben ist,
eine Kurbelwelle (19), die in dem Kurbelgehäuse (11) aufgenommen und an demselben getragen wird, um dazu in der Lage zu sein, sich um eine Achse desselben zu drehen,
einen Kühler (22), der an dem Lüftergehäuse (24) angebracht und von dem Motor (10) in einer Fahrzeugbreitenrichtung nach außen angeordnet ist,
einen Kühllüfter (21), der nahe dem Kühler (22) angebracht und dafür angeordnet ist, Kühlluft an dem Kühler (22) vorbei und durch die Abstrahlungsöffnung (25) zu treiben, wobei der Lüfter (21) wenigstens teilweise in dem Lüftergehäuse angeordnet und dafür eingerichtet ist, sich im Eingriff mit der Kurbelwelle (19) zu drehen, und **dadurch gekennzeichnet, dass** das Lüftergehäuse (24) an einer äußeren Umfangskante desselben mit einem Anbringungsplattenabschnitt (26) geformt ist, wobei ein schwingungsdämpfendes Material (50) zwischen dem Lüftergehäuse (24) und dem Kühler (22) eingefügt ist.

2. Motorrad nach Anspruch 1, wobei der Kühler (22) einen ersten und einen zweiten Tank (36, 37) umfasst, die an den beiden Enden desselben angeordnet sind, wobei ein Kern (38) zwischen denselben angeordnet ist.

3. Motorrad nach Anspruch 1, wobei ein Anbringungsabschnitt (41), der dafür eingerichtet ist, an dem Lüftergehäuse (24) angebracht zu werden, an dem einen Längsende des ersten Tanks (36) bereitgestellt wird und eine Verbindung (39) zu einem Rohr (40) zum Umwälzen eines Kühlwassers zwischen dem ersten Tank (36) und einem Motor (10) an dem anderen Längsende des ersten Tanks (36) bereitgestellt wird.

4. Motorrad nach Anspruch 3, wobei wenigstens zwei befestigte Abschnitte (45), die dafür eingerichtet sind, an dem Lüftergehäuse (24) befestigt zu werden, parallel an einem Längsende des zweiten Tanks (37) und in einer Position, die diagonal zu dem Anbringungsabschnitt (41) ist, angeordnet sind.

5. Motorrad nach einem der vorhergehenden Ansprüche, wobei nur derjenige Abschnitt des Kühlers (22), der an dem Lüftergehäuse (24) angebracht ist, durch das schwingungsdämpfende Material (50) in Berührung mit dem Lüftergehäuse (24) steht und der verbleibende Teil nicht in Berührung mit dem Lüftergehäuse (24) steht.

6. Motorrad nach einem der vorhergehenden Ansprüche, wobei der Lüfter (21) einen Zentrifugallüfter umfasst, der eine Drehachse definiert, die parallel zu einer Achse des Lüftergehäuses angeordnet ist, um Kühlluft, die durch den Kühler (22) hindurchgeht, zu der Abstrahlungsöffnung (25) zu leiten.

7. Motorrad nach einem der vorhergehenden Ansprüche, wobei der Kühler (22) in einer Dickenrichtung angeordnet ist, in der eine Abmessung desselben unter den jeweiligen Abmessungen desselben in einer Höhenrichtung, einer Breitenrichtung und der Dickenrichtung auf ein Minimum festgesetzt ist, gerichtet in der Fahrzeugbreitenrichtung.

8. Motorrad nach einem der vorhergehenden Ansprüche, wobei der Motor (10) einen als Einheit schwingenden Motortyp umfasst, der dazu in der Lage ist, in Vertikalrichtung im Verhältnis zu einem Fahrzeugrahmen (2) um einen Gelenkbolzen (12) zu schwenken, der entlang der Fahrzeugbreitenrichtung angeordnet ist.

9. Motorrad nach einem der vorhergehenden Ansprüche, wobei der Kühllüfter (21) von dem Kühler (22) nach innen angeordnet ist.

10. Motorrad nach einem der Ansprüche 1 bis 9, wobei der Kühllüfter (21) von dem Kühler (22) nach außen angeordnet ist.

## Revendications

1. Motocycle, comprenant :
un carter de ventilateur métallique (24), définissant une ouverture de rayonnement (25) et monté sur un carter (11) du moteur (10) ou faisant partie intégrante de celui-ci ;
un vilebrequin (19), reçu dans le carter du moteur (11) et supporté sur celui-ci, pour pouvoir tourner sur un axe de celui-ci ;
un radiateur (22), monté sur le carter du ventilateur (24) et agencé vers l'extérieur du moteur (10), dans une direction de la largeur du véhicule ;
un ventilateur de refroidissement (21), monté près du radiateur (22) et destiné à entraîner de l'air de refroidissement le long du radiateur (22) et à travers l'ouverture de rayonnement (25), le ventilateur (21) étant positionné au moins partiellement dans le carter du ventilateur et étant adapté pour tourner en verrouillage mutuel avec le vilebrequin (19) ; et **caractérisé en ce que** le carter du ventilateur (24) comporte sur un bord périphérique externe une partie de plaque de montage (26) ; un matériau à absorption des vibrations (50) étant agencé entre le carter du ventilateur (24) et le radiateur (22).

2. Motocycle selon la revendication 1, dans lequel le radiateur (22) comprend des premier et deuxième réservoirs (36, 37) qui sont agencés sur leurs deux extrémités, un faisceau (38) étant agencé entre elles.

3. Motocycle selon la revendication 1, dans lequel une partie de montage (41), adaptée pour être montée sur le carter du ventilateur (24), est agencée au niveau d'une extrémité dans le sens de la longueur du premier réservoir (36), un raccordement (39) vers un tuyau (40) destiné à faire circuler une eau de refroidissement entre le premier réservoir (36) et un moteur (10) étant agencé au niveau de l'autre extrémité dans le sens de la longueur dudit premier réservoir (36).

4. Motocycle selon la revendication 3, dans lequel au moins deux parties fixes (45), adaptées pour être fixées sur le carter du ventilateur (24), sont agencées parallèlement au niveau d'une extrémité dans le sens de la longueur du deuxième réservoir (37), et dans une position diagonale par rapport à la partie de montage (41).

5. Motocycle selon l'une quelconque des revendications précédentes, dans lequel seule la partie du radiateur (22) qui est montée sur le carter du ventilateur (24) contacte le carter du ventilateur (24) à travers le matériau à absorption des vibrations (50), la partie restante ne contactant pas le carter du ventilateur (24).

6. Motocycle selon l'une quelconque des revendications précédentes, dans lequel le ventilateur (21) comprend un ventilateur centrifuge, définissant un axe de rotation agencé parallèlement à un axe du carter du ventilateur, pour diriger de l'air de refroidissement passant à travers le radiateur (22) vers l'ouverture de rayonnement (25).

7. Motocycle selon l'une quelconque des revendications précédentes, dans lequel le radiateur (22) est agencé dans une direction de l'épaisseur, une dimension de celui-ci étant ajustée de sorte à correspondre à un minimum parmi les dimensions respectives dans une direction de la hauteur, une direction de la largeur et la direction de l'épaisseur, dirigée dans la direction de la largeur du véhicule.

8. Motocycle selon l'une quelconque des revendications précédentes, dans lequel le moteur (10) comprend un moteur unitaire du type oscillant, capable d'osciller verticalement par rapport à un châssis du véhicule (2) autour d'un arbre de pivotement (12) agencé le long de la direction de la largeur du véhicule.

9. Motocycle selon l'une quelconque des revendications précédentes, dans lequel le ventilateur de refroidissement (21) est agencé vers l'intérieur du radiateur (22).

10. Motocycle selon l'une quelconque des revendications 1 à 9, dans lequel le ventilateur de refroidissement (21) est agencé vers l'extérieur du radiateur (22).
